# FASCICULE DE BREVET EUROPEEN

(11) **EP 0 370 883 B1**
(45) Date de publication et mention de la délivrance du brevet: **18.08.1993**
(21) Numéro de dépôt: 89403186.3
(22) Date de dépôt: 20.11.1989
(51) Int. Cl.: F23D 14/46, F16K 31/524

(54) **Rampe d'injection de gaz pour brûleur séquentiel de chaudière à gaz à puissance variable**
Einspritzgestänge für gasförmigen Brennstoff bei einem folgegesteuerten Brenner eines gasbeheizten Kessels mit variabler Leistung
Gaseous fuel injection rail for the sequentially operated burner of a gas-fired boiler with variable output

(30) Priorité: 24.11.1988 FR 8815335
(43) Date de publication de la demande: 30.05.1990
(73) Titulaire: SAUNIER DUVAL EAU CHAUDE CHAUFFAGE - SDECC, F-94132 Fontenay Sous Bois Cédex (FR)
(72) Inventeur: Vallat, Didier, F-44700 Orvault (FR)
(74) Mandataire: Lhuillier, René

(56) Documents cités:
- BE-A- 672 185
- DE-U- 8 815 506
- FR-A- 2 454 582
- US-A- 1 591 228
- US-A- 3 211 373
- MACHINE DESIGN, vol. 34, no 28, 6 décembre 1962, page 159; "Free piston controls orifices"

## Description

L'invention se rapporte aux chaudières à gaz à puissance variable et concerne précisément une rampe d'injection de gaz aux bras de brûleur, permettant une alimentation variable du gaz.

Dans les appareils de chauffage au gaz et plus précisément dans les appareils dits mixtes, c'est-à-dire fonctionnant à la fois pour le chauffage central et pour la production d'eau chaude sanitaire, il est souvent nécessaire de moduler la puissance de l'appareil en fonction des besoins calorifiques du logement, et on sait par exemple que la puissance recherchée est limitée en chauffage tandis qu'elle peut être maximum en puisage.

On connaît des chaudières murales mixtes à gaz dans lesquelles une régulation progressive permet de moduler le débit du gaz au brûleur, de manière à ce que la puissance fournie par la chaudière équilibre aussi exactement que possible les besoins calorifiques.

Malheureusement dans les conceptions connues de ces chaudières on se trouve obligé de limiter la plage de modulation vers le bas aux environs du tiers de la puissance nominale de la chaudière, car la chute du rendement de ces chaudières avec la décroissance relative du débit de gaz devient pratiquement inacceptable au-dessous du tiers du débit nominal.

Cette impossibilité qu'on a de pouvoir moduler la puissance de la chaudière au-dessous de 30 % est un inconvénient qui devient de plus en plus grave pour les chaudières mixtes à une époque où les puissances installées pour le chauffage des habitations tendrait à diminuer et où les puissances en production d'eau chaude sanitaire tendent au contraire à augmenter, créant ainsi une disparité de plus en plus importante entre la puissance à fournir en chauffage et la puissance à fournir en puisage.

Pour éviter cet inconvénient et élargir autant que possible la zone de modulation de l'appareil, on a bien pensé (comme le montre notamment le US-A 3,211,373), à fractionner la rampe portant les injecteurs de brûleur en au moins deux rampes distinctes dont une seule est alimentée en chauffage et les deux en puisage, mais cela nécessite une électrovalve supplémentaire en plus du mécanisme gaz habituel.

On connaît aussi par le US-A 1,591,228 une valve à deux soupapes d'admission de gaz permettant de fournir à un appareil de chauffage trois plages de puissance.

Dans les appareils à puissance variable, on préfère maintenant utiliser des électrovalves à ouverture progressive qui permettent d'obtenir à partir d'un premier seuil d'ouverture correspondant à un débit déterminé, une augmentation progressive de l'admission du gaz, directement asservie à l'intensité du courant d'excitation de la bobine de l'électrovalve. Mais hormis les inconvénients connus inhérents au montage et au réglage de ces électrovalves, il est apparu qu'on ne maîtrise pas aisément l'ouverture du clapet profilé à cause des problèmes d'hystérésis.

En effet selon que la bobine de l'électrovalve est excitée par des intensités croissantes ou décroissantes de courant électrique, du fait de l'hystérésis, l'ouverture du clapet profilé, à intensité égale, n'est pas identique selon que l'on est en phase de montée de courant, ou en phase de descente de courant. Il en résulte une variation de débit de gaz admis au brûleur. L'air comburant se décomposant en air primaire admis dans le bras de brûleur et air secondaire, la modulation de gaz par électrovanne classique ne fait varier pratiquement que l'air primaire, l'air secondaire restant pratiquement constant, ce qui entraîne une chute appréciable du rendement de combustion.

Indépendamment de l'hystérésis, la précision du débit de gaz d'admission est directement liée à la précision de l'ouverture progressive du clapet profilé, et elle est donc très sensible aux variations dimensionnelles du clapet, et à son réglage.

Afin d'éviter ces inconvénients, et en même temps apporter une solution plus simple au problème posé par les changements de gaz ou les modifications de puissance, la Demanderesse a imaginé un mécanisme complètement différent des électrovalves de tous types, qui ne met plus en oeuvre des pièces électromagnétiques sujettes à hystérésis, ni des clapets multiples ou profilés, rappelés par des ressorts et qui doivent dégager plus ou moins une ouverture de passage de gaz en fonction d'une intensité, ledit mécanisme allant dans le sens d'une diminution du prix de revient, d'une simplification du montage, et d'un fonctionnement rigoureux et fiable grâce auquel est obtenue une alimentation modulable du gaz admis aux brûleurs.

L'invention a donc pour objet une rampe pourvue d'une série d'injecteurs pour l'injection de gaz à un brûleur séquentiel de chaudière à gaz à puissance variable, réagissant à une commande quelconque fournie par un dispositif de contrôle et de régulation en vue d'asservir le débit de gaz admis au brûleur à cette commande en fonction de la demande calorifique, rampe selon laquelle les injecteurs de gaz peuvent être obturés, chacun par un organe obturateur qui lui est propre, chaque organe obturateur étant déplacé de sa position de fermeture à sa position d'ouverture par au moins une partie en creux ou en relief d'un arbre rotatif manoeuvré par un moteur et qui est située vis-à-vis dudit organe obturateur, chaque partie en creux ou en relief étant éventuellement décalée angulairement sur l'arbre par rapport aux parties voisines pour qu'à chaque position angulaire prise par l'arbre rotatif à partir d'une position d'arrêt, au moins une partie en creux ou en relief agisse sur au moins un organe obturateur pour l'ouvrir et libérer un débit de gaz par l'injecteur correspondant.

Selon une caractéristique particulière de l'invention chaque injecteur est desservi par une alvéole de distribution placée à l'intérieur de la rampe dont l'orifice supérieur de communication avec la chambre intérieure est obturée par un clapet constituant l'organe obturateur. En outre chaque clapet est monté sur l'extrémité libre ou fixe d'une lamelle flexible ou rigide traversant transversalement la chambre, dont l'autre extrémité est fixe ou libre, la série des lamelles se trouvant disposée au-dessus de l'arbre rotatif, transversalement, l'étanchéité des clapets étant assurée soit par la flexibilité de la lame, soit par un ressort qui maintient le clapet en appui sur son siège, l'ouverture du clapet étant assuré dans ce cas par une lame rigide.

Selon une autre caractéristique particulière de l'invention, la partie creuse prévue sur l'arbre rotatif au droit de chaque lamelle est un évidement dans lequel peut s'effacer un petit ergot fixé au centre de la dite lamelle, certains évidements pouvant couvrir un secteur angulaire plus important sur l'arbre formant ainsi une gorge transversale dans laquelle l'ergot se déplace relativement sans agir sur la lamelle.

Avantageusement le profil des évidements et des ergots est étudié pour que les bords de chaque évidement agissent comme une came sur les bords de chaque ergot pour favoriser le soulèvement des lamelles.

Selon une variante de réalisation, la partie en relief prévue sur l'arbre rotatif au droit de chaque lamelle est une came attaquant directement la lamelle correspondante.

D'autres caractéristiques particulières et avantages de l'invention seront mieux perçus à la lecture de la description qui va suivre d'un exemple non limitatif de réalisation dans laquelle on se réfère aux dessins annexés qui représentent.

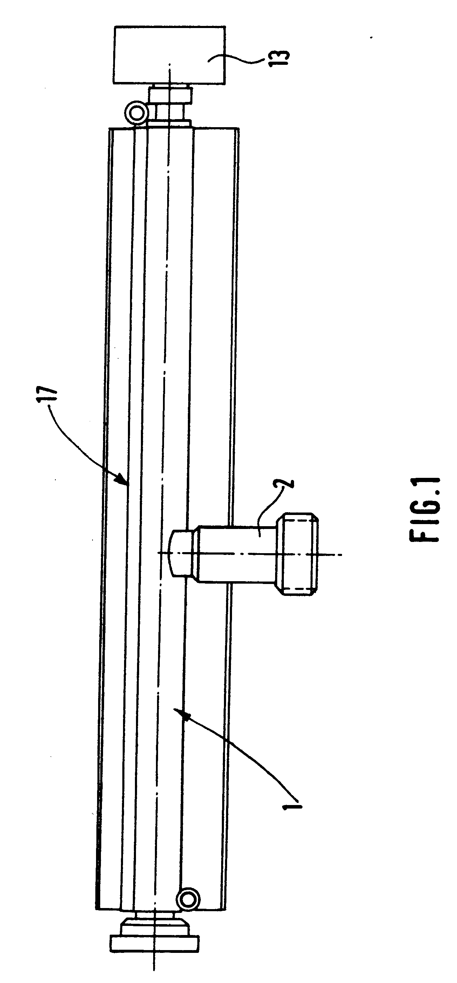

Figure 1 une vue générale en élévation d'une rampe de brûleur.

Figure 2 une vue en coupe transversale de ladite rampe.

Figure 3 une vue du dessus de la rampe d'injection partiellement écorchée.

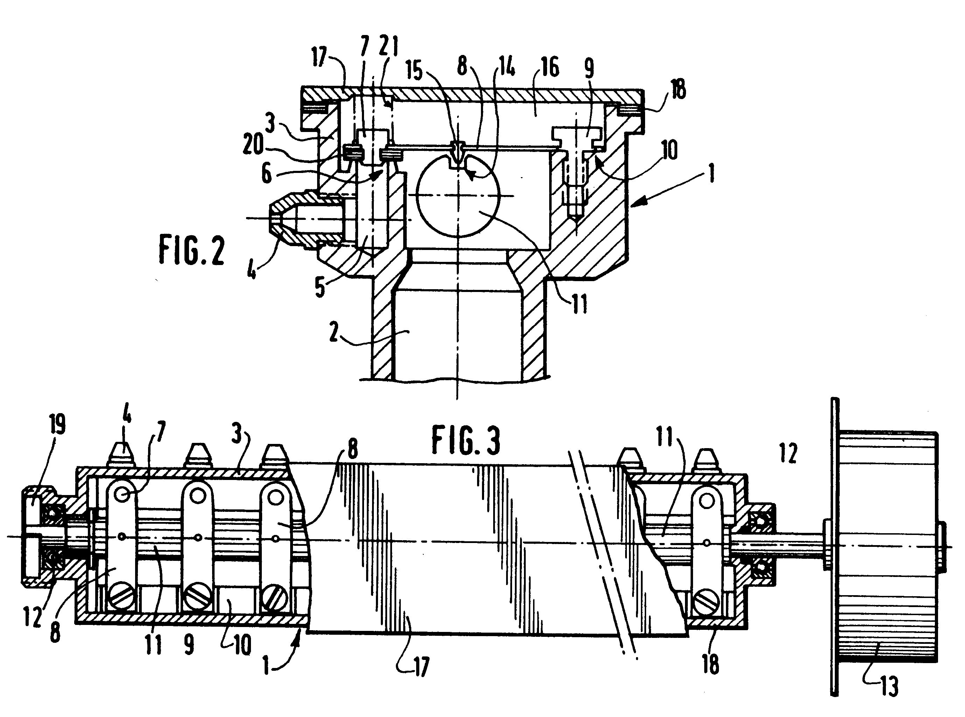

La rampe d'injection 1 représentée sur la figure se présente comme une pièce profilée allongée dans laquelle le gaz est admis par un conduit d'entrée 2. La chambre intérieure longitudinale 16 qui est la chambre d'admission gaz est fermée à sa partie supérieure par une plaque 17, l'étanchéité étant assurée par un joint 18. Cette plaque démontable permet d'accéder facilement à l'intérieur de la chambre 16 pour le réglage des éléments internes dont il sera question plus loin. Sur une face latérale 3 de ladite rampe sont alignés une série d'injecteurs 4 de même calibre d'ouverture suivant la nature du gaz qui s'étendent d'une extrémité de la rampe à l'autre. Chaque injecteur est alimenté par une alvéole de distribution 5, à l'intérieur de la rampe, dont l'orifice supérieur 6 grâce auquel l'alvéole communique avec la chambre intérieure 16 de la rampe, est obturé par un petit clapet 7 muni de sa garniture 20 constituant un organe obturateur. Celui-ci est monté sur l'extrémité libre d'une lamelle rigide 8 traversant transversalement la chambre intérieure 16 dont l'autre extrémité est maintenue librement par une vis 9 sur un épaulement 10 prévu juste en face à l'intérieur de la rampe. Un petit ressort 21 prenant appui sur la plaque 17 maintient le clapet 7 en appui contre son siège, fermant l'orifice 6. A l'intérieur de la rampe et sur toute sa longueur, on a disposé sous la série de lamelles 8, un arbre 11 qui peut tourner sur des paliers appropriés 12 prévus à chaque extrémité de la rampe. Un moteur pas à pas 13 monté en bout de l'arbre 11 assure sa rotation pas à pas. Au droit de chaque lamelle 8 l'arbre porte un évidement 14, chaque évidement ayant une orientation axiale particulière différente selon la lamelle qui lui fait face. Chaque lamelle est munie d'un petit ergot central 15 destiné à s'effacer à l'intérieur de l'évidement 14 quand ce dernier est orienté vers le haut comme représenté à la figure 2. On comprend que dans ce cas la lamelle rigide occupe une position horizontale pour laquelle le petit clapet 7 muni de sa garniture 20 est appliqué contre l'orifice 6 et obture l'alvéole 5, grâce au ressort 21, interdisant le passage du gaz vers l'injecteur 4 correspondant. Par contre, si le moteur pas à pas 13 a fait tourner d'un pas l'arbre 11, l'évidement 14 s'est déplacé angulairement et l'ergot 15 échappe audit évidement, vient en appui contre le corps de l'arbre et soulève la lamelle 8 à l'encontre de sa force de rappel due au ressort 21. La garniture 20 Du clapet 7 se décolle de son siège, ouvrant ainsi l'orifice 6 concerné. On notera que pour chaque injecteur l'arbre 11 porte un ou éventuellement plusieurs évidements sur sa périphérie. Il existe ainsi une position angulaire de l'arbre pour laquelle tous les évidements, sauf un, sont en position haute c'est-à-dire qu'une seule lamelle est soulevée et le gaz ne sort que par un seul injecteur. On est en régime minimum. A l'inverse il existe une autre position angulaire de l'arbre pour laquelle tous les évidements 14 sont en position basse et par conséquent tous les injecteurs sont ouverts puisque les ergots 15 sont tous en appui sur le corps de l'arbre. On est en régime de puissance maximum. Par le jeu de plusieurs évidements orientés de façon précise les uns par rapport aux autres, on peut ouvrir un nombre variable d'injecteurs et obtenir autant de pas de puissance qu'il y a d'injecteurs. Il existe aussi une position angulaire de l'arbre pour laquelle tous les évidements 14 sont alignés en position haute, et pour laquelle par conséquent toutes les lamelles 8 sont en position d'obturation et les orifices 6 fermés. La rampe d'injection peut donc aussi jouer le rôle d'organe d'arrêt de l'admission du gaz au brûleur.

Bien entendu le profil des évidements 14 et des ergots 15 est étudié pour que les bords de chaque évidement agissent comme une came sur les bords de chaque ergot et que le soulèvement des lamelles soit assuré aisément sans risque de blocage. On notera que certains évidements 14 peuvent couvrir un secteur angulaire de l'arbre 11 plus ou moins important, formant ainsi une gorge transversale permettant la rotation de l'arbre sans agir sur l'ergot 15 correspondant, puisque l'ergot fixe peut courir dans relativement toute la longueur de la gorge sans agir sur la lamelle.

On notera également à la figure 3 la présence d'un ressort 19 monté en bout d'arbre destiné à rappeler l'arbre 11 dans une position de repos prédéterminée qui correspondrait, par exemple, à l'alignement de tous les évidements 14 en position haute c'est-à-dire à la fermeture de l'ensemble des injecteurs. Quand il n'y a pas de demande de calories à l'appareil, mais que celui-ci est prêt à fonctionner, le gaz est admis dans la chambre 16 à sa pression d'alimentation. Le ressort 19 maintient l'arbre 11 dans une position pour laquelle tous les évidements 14 sont alignés en position haute et le gaz ne peut sortir par aucun injecteur.

Dès qu'un signal de commande électrique est fourni au moteur 13 par l'intermédiaire du dispositif de régulation, correspondant à la puissance recherchée, le moteur va faire tourner du nombre de pas nécessaire de l'arbre 11, et l'ensemble des évidements (du fait de leur largeur angulaire) n'aura pas d'action sur les ergots, sauf certains d'entre eux, qui agiront sur l'ergot 15 correspondant pour soulever les lamelles 8. Le gaz est alors admis à un débit déterminé par la régulation, aux brûleurs à partir des injecteurs 4. Si le signal de commande change, le moteur tournera d'un nombre de pas correspondant et viendra alors faire échapper plusieurs ergots des évidements correspondants, et ouvrir l'admission gaz à plusieurs injecteurs pour fournir un débit de gaz plus important.

Après fonctionnement, quand le moteur n'est plus sollicité, il y a remise à zéro du mécanisme par retour de l'arbre dans sa position originale sous l'action du ressort 19, position pour laquelle tous les injecteurs sont fermés, la rampe se comportant comme organe d'arrêt d'admission gaz aux brûleurs.

L'utilisation d'un moteur pas à pas évite un asservissement et permet de travailler en boucle ouverte avec une excellente précision sur la position. La commande du moteur pas à pas est alors une commande classique de positionnement sur un tour. Chaque position correspond à un échelon de puissance et, comme indiqué plus haut, on peut descendre en puissance jusqu'à celle correspondant à un seul injecteur dans d'excellentes conditions de combustion et d'interallumage.

Le brûleur séquentiel associé à ce type de rampe d'injection de gaz ne possède que peu de pièces. Lors des changements de gaz il suffit de changer les injecteurs.

Le mécanisme ainsi décrit peut comporter un certain nombre de variantes. Notamment au niveau de l'arbre 11, on peut prévoir, au lieu des évidements 14 destinés à coopérer avevc les ergots 15, que l'arbre porte des cames en relief, chacun ayant une orientation particulière, au droit des lamelles 8. Selon sa position angulaire, chaque camme attaque ou non directement la lamelle correspondante pour la soulever et dégager le clapet 7 de son siège. On peut prévoir également que la lamelle 8 soit flexible et possède sa propre élasticité lui permettant de revenir à une position horizontale pour l'obturation de l'orifice 6. Auquel cas son autre extrémité au niveau de la vis 9 est fixe et on évite ainsi l'usage du petit ressort 21.

## Revendications

1. Rampe d'injection de gaz pour brûleur séquentiel de chaudière à gaz à puissance variable, réagissant à un signal de commande électrique fourni par un dispositif de contrôle et de régulation en vue d'asservir le débit de gaz admis au brûleur à ce courant en fonction de la demande de calories, la rampe étant pourvue d'une série d'injecteurs de gaz (4), caractérisée en ce que les injecteurs peuvent être obturés, chacun par un organe obturateur (7, 20) qui lui est propre et en ce que chaque organe obturateur est déplacé de sa position de fermeture à sa position d'ouverture par au moins une partie en creux ou en relief (14) d'un arbre rotatif (11) manoeuvré par un moteur (13) et qui est située vis-à-vis dudit organe obturateur, chaque partie en creux ou en relief étant éventuellement décalée angulairement sur l'arbre par rapport aux parties voisines pour qu'à chaque position angulaire prise par l'arbre rotatif à partir d'une position d'arrêt, au moins une partie en creux ou en relief agisse sur au moins un organe obturateur pour l'ouvrir et libérer un débit de gaz par l'injecteur correspondant.

2. Rampe d'injection selon la revendication 1, caractérisée en ce que chaque injecteur (4) est desservi par une alvéole de distribution (5) placée à l'intérieur de la rampe dont l'orifice supérieur (6) de communication avec la chambre intérieure (16) est obturé par un clapet (7) muni d'une garniture 20 constituant l'organe obturateur.

3. Rampe d'injection selon les revendications 1 et 2, caractérisée en ce que chaque clapet (7) est monté sur l'extrémité d'une lamelle (8) rigide rappelée par un ressort (21),traversant transversalement la chambre (16), dont l'autre extrémité est mobile, la série des lamelles (8) se trouvant disposée au-dessus de l'arbre rotatif (11), transversalement.

4. Rampe d'injection selon les revendications 1 et 2, caractérisée en ce que chaque clapet est monté sur l'extrémité libre d'une lamelle flexible élastique traversant transversalement la chambre (16), dont l'autre extrémité est fixe, la série des lamelles (8) se trouvant disposée au dessus de l'arbre rotatif (11), transversalement.

5. Rampe d'injection selon la revendication 1, caractérisée en ce que l'arbre rotatif (11) est entraîné par un moteur pas à pas (13) et rappelé dans une position de repos prédéterminée par un ressort (19) monté en bout d'arbre.

6. Rampe d'injection selon les revendications 1 et 2, caractérisée en ce que la partie en creux prévue sur l'arbre rotatif (11) au droit de chaque lamelle (8) est un évidement (14) dans lequel peut s'effacer un petit ergot (15) fixé au centre de la dite lamelle.

7. Rampe d'injection selon la revendication 6, caractérisée en ce que certains évidements (14) couvrent un secteur angulaire plus important sur l'arbre (11) formant une gorge transversale dans laquelle l'ergot (15) se déplace relativement sans agir sur la lamelle (8).

8. Rampe d'injection selon la revendication 6, caractérisée en ce que le profil des évidements (14) et des ergots (15) est étudié pour que les bords de chaque évidement agissent comme une came sur les bords de chaque ergot pour favoriser le soulèvement des lamelles.

9. Rampe d'injection selon les revendications 1 et 2, caractérisée en ce que la chambre intérieure (16) de la rampe constituant la chambre d'admission gaz est fermée à sa partie supérieure de façon étanche par une plaque démontable (17).

10. Rampe d'injection selon les revendications 1, 3 et 4, caractérisée en ce que la partie en relief prévue sur l'arbre rotatif (11) au droit de chaque lamelle est une came attaquant directement la lamelle correspondante.

## Patentansprüche

1. Gasinjektionsvorrichtung für sequentielle Brenner eines Gasheizkessels mit variabler Leistung, die auf ein elektrisches Steuersignal reagiert, das von einer Steuer- und Regeleinrichtung geliefert wird, um die Zufuhr von Gas zum Brenner in Abhängigkeit vom Wärmebedarf zu regeln, wobei die Injektionsvorrichtung eine Reihe von Gasinjektoren (4) hat, **dadurch gekennzeichnet**, daß die Gasinjektoren jeweils einzeln durch ein Schließorgan (7, 20) verschließbar sind, das ihnen zugeordnet ist, und daß jedes Schließorgan von seiner Schließposition in seine Öffnungsposition bewegbar ist durch mindestens einen ausgenommenen oder zurückspringenden Teilbereich (14) einer Steuerwelle (11), die von einem Motor ( 13) angetrieben und dem Schließorgan gegenüberliegend angeordnet ist, wobei jeder ausgenommene oder zurückspringende Teilbereich gegebenenfalls winkelversetzt gegenüber den benachbarten Teilbereichen an der Steuerwelle angeordnet ist, damit bei jeder Winkelstellung, die die Steuerwelle ausgehend von einer Ruheposition einnehmen kann, zumindest ein ausgenommener oder zurückspringender Teilbereich auf zumindest ein Schließorgan wirkt, um einen Gasstrom zum zugehörigen Injektor zu öffnen und freizugeben.

2. Gasinjektionsvorrichtung nach Anspruch 1, dadurch gekennzeichnet, daß jeder Injektor (4) über einen Verteilerkanal (5) versorgt wird, der im Inneren der Vorrichtung angeordnet ist und dessen obere Öffnung (6), die mit der Innenkammer (16) kommuniziert, durch eine mit einer Armatur (20) versehene Klappe (7) geschlossen ist, die das Schließorgan ausbilden.

3. Gasinjektionsvorrichtung nach den Ansprüchen 1 und 2, dadurch gekennzeichnet, daß jede Klappe (7) am Endbereich einer starren Lamelle (8) angeordnet ist, die von einer Feder (21) rückgestellt wird, die die Kammer (16) durchquert und deren anderer Endbereich beweglich ist, dabei ist die Reihe der Lamellen (8) oberhalb der Steuerwelle (11) und quer angeordnet.

4. Gasinjektionsvorrichtung nach den Ansprüchen 1 und 2, dadurch gekennzeichnet, daß jede Klappe am freien Endbereich einer flexiblen elastischen und die Kammer (16) durchquerenden Lamelle angeordnet ist, deren anderer Endbereich fixiert ist, wobei die Reihe der Lamellen (8) oberhalb der Steuerwelle (11) und quer angeordnet ist.

5. Gasinjektionsvorrichtung nach Anspruch 1, dadurch gekennzeichnet, daß die Steuerwelle (11) durch einen Schrittmotor (13) angetrieben ist und in eine vorgegebene Ausgangsposition durch eine Feder (19) zurückgestellt wird, die an einem Ende der Steuerwelle angeordnet ist.

6. Gasinjektionsvorrichtung nach den Ansprüchen 1 und 2, dadurch gekennzeichnet, daß der ausgenommene Teilbereich der Steuerwelle (11) in unmittelbarer Nähe jeder Lamelle (8) eine Ausnehmung (14) ist, in die ein kleiner Vorsprung (15) eingreifen kann, der auf der Mitte der Lamelle befestigt ist.

7. Gasinjektionsvorrichtung nach Anspruch 6, dadurch gekennzeichnet, daß einige Ausnehmungen (14) einen größeren Winkelbereich auf der Steuerwelle (11) abdecken und eine transversale Einkerbung bilden, in welcher sich der Vorsprung (15) bewegen kann, ohne daß die Lamelle (8) betätigt wird.

8. Gasinjektionsvorrichtung nach Anspruch 6, dadurch gekennzeichnet, daß das Profil der Ausnehmungen (14) und der Vorsprünge (15) so bestimmt ist, daß die Ränder jeder Ausnehmung wie ein Steuernocken auf die Randbereiche jedes Vorsprungs wirken, um ein Anheben der Lamellen zu begünstigen.

9. Gasinjektionsvorrichtung nach den Ansprüchen 1 und 2, dadurch gekennzeichnet, daß die Kammer (16) der Injektionsvorrichtung, die die Gaszufuhrkammer bildet, in ihrem oberen Bereich durch eine demontierbare Platte (17) dicht abgeschlossen ist.

10. Gasinjektionsvorrichtung nach den Ansprüchen 1, 3 und 4, dadurch gekennzeichnet, daß der auf der Steuerwelle (11) ausgebildete, strukturierte Bereich in unmittelbarer Nähe jeder Lamelle ein Nockenteil ist, das direkt auf die zugehörige Lamelle wirkt.

## Claims

1. A gas injection pipe for a sequential gas boiler with a variable output reacting to an electric control signal provided by a control and regulation device with a view to making the gas flow admitted to the boiler dependent on this current as a function of the heating demand, the pipe being provided with a set of gas injectors (4), characterized in that the injectors can each be obturated by an obturating member (7, 20) appertaining thereto, and in that each obturating member is displaced from its closing position into its opening position by at least one hollow or projecting portion (14) of a rotary shaft (11) operated by a motor (13) and which is situated opposite the said obturating member, each hollow or projecting portion being possibly angularly offset on the shaft relative to the adjoining portions, so that at each angular position assumed by the rotary shaft starting from a rest position, at least one hollow or projecting portion is acting on at least one obturating member to open it and to release a gas flow through the corresponding injector.

2. An injection pipe according to claim 1, characterized in that each injector (4) is fed through a supply recess (5) placed inside the pipe whose upper opening (6) for communicating with the internal chamber (16) is obturated by a valve (7) provided with a packing (20), which constitutes the obturating member.

3. An injection pipe according to claims 1 and 2, characterized in that each valve (7) is mounted on the end of a rigid blade (8) biased by a spring (21) which transversely passes through the chamber (16), whose other end is movable, the set of blades (8) being transversely disposed above the rotary shaft (11).

4. An injection pipe according to claims 1 and 2, characterized in that each valve is mounted on the free end of a resilient flexible blade which transversely passes through the chamber (16) whose other end is fixed, the set of blades (8) being transversely disposed above the rotary shaft (11).

5. An injection pipe according to claim 1, characterized in that the rotary shaft (11) is driven by a stepping motor (13) and biased into a rest position predetermined by a spring (19) which is mounted at the end of the shaft.

6. An injection pipe according to claims 1 and 2, characterized in that the hollow portion provided on the rotary shaft (11) opposite each blade (8) is a recess (14) wherein there may engage a small stud (15) fixed at the centre of the said blade.

7. An injection pipe according to claim 6, characterized in that certain recesses (14) cover a larger angular sector on the shaft (11), forming a transverse groove wherein the stud (15) is relatively displaced without acting on the blade (8).

8. An injection pipe according to claim 6, characterized in that the profile of the recesses (14) and of the studs (15) is designed so that the edges of each recess act as a cam on the edges of each stud to promote the lifting of the blades.

9. An injection pipe according to claims 1 and 2, characterized in that the internal chamber (16) of the pipe constituting the gas admission chamber is closed at its upper portion in a leakproof manner by a detachable plate (17).

10. An injection pipe according to claims 1, 3 and 4, characterized in that the portion in relief provided on the rotary shaft (11) opposite each blade is a cam directly acting on the corresponding blade.
